# FASCICULE DE BREVET EUROPEEN

(11) **EP 3 710 727 B1**
(45) Date de publication et mention de la délivrance du brevet: **26.01.2022**
(21) Numéro de dépôt: 18812236.0
(22) Date de dépôt: 06.11.2018
(51) Int. Cl.: F16H 1/28, F16H 57/08, F16H 57/04

(54) **RÉDUCTEUR DE VITESSE A TRAIN PLANÉTAIRE OU ÉPICYCLOÏDAL DE TURBOMACHINE**
TURBOMASCHINENGETRIEBE MIT PLANETENGETRIEBE
TURBOMACHINE SPEED REDUCER WITH PLANETARY GEAR SET

(30) Priorité: 17.11.2017 FR 1760850
(43) Date de publication de la demande: 23.09.2020
(73) Titulaire: Safran Transmission Systems, 92700 Colombes (FR)
(72) Inventeur: DOMBEK, Alexis, Claude, Michel, 77550 Moissy-Cramayel (FR)
(74) Mandataire: Gevers & Orès
(86) Numéro de dépôt international: PCT/FR2018/052740
(87) Numéro de publication internationale: WO 2019/097136

(56) Documents cités:
- EP-A1- 1 464 869
- EP-B1- 1 464 869
- WO-A1-94/29614
- WO-A2-2009/080031
- FR-A- 1 379 451

## Description

### Domaine de l'invention

La présente invention concerne le domaine des réducteurs de vitesse à train planétaire ou à train épicycloïdal pour turbomachine en particulier d'aéronef.

### Etat de la technique

L'état de l'art comprend notamment les documents WO-A1-2010/092263, FR-A1-2 987 416, EP-A1-1 464 869, FR-A1-3 041 054, FR-A-1 379 451, WO-A1-94/29614 et WO-A2-2009/080030.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important pour assurer la lubrification et le refroidissement de leurs pignons et paliers. Le débit d'huile est fonction de l'architecture et est par exemple de l'ordre de 6000 à 7000 litres par heure au décollage pour une architecture particulière.

Parmi les réducteurs utilisés, on trouve les trains planétaires et épicycloïdaux qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages.

Lorsque le porte-satellites est fixe en rotation, le solaire et la couronne sont menant et mené, respectivement, ou inversement. Le réducteur est alors du type « planétaire ».

Dans le cas inverse d'un réducteur à train épicycloïdal, la couronne extérieure est fixe en rotation et le solaire et le porte-satellites sont menants et menés.

Le solaire et les satellites peuvent être logés dans une cage qui supportent les paliers de guidage des satellites ainsi que des moyens de lubrification des satellites et du solaire. Le solaire comprend des cannelures internes d'accouplement à un premier arbre de la turbomachine et la cage du réducteur est solidaire d'un fût cylindrique qui comprend des cannelures externes d'accouplement à un autre arbre.

La liaison de la cage au fût est en général rigide. En variante, on peut envisager une technologie dans laquelle la cage est reliée au fût par des liaisons souples, telles que décrites dans le document EP-A1-1 464 869. Dans un tel cas, le fût comprend une rangée annulaire de bras axiaux qui sont reliés par des liaisons souples à la cage.

On a proposé de réaliser ces liaisons souples par des rotules, les bras portant des rotules traversées par des doigts s'étendant dans des logements axiaux prévus à la périphérie de la cage.

En fonctionnement, lors de la mise sous couple du porte-satellites, les bras vont fléchir et transmettre le couple à la cage. Les rotules permettent de ne pas transmettre le fléchissement des bras aux doigts. Cependant, pour des questions de montage, des jeux sont présents entre les doigts et les rotules. Ainsi, lors des déformations, des déplacements relatifs entre les doigts et les rotules apparaissent. Ces déplacements relatifs sur des interfaces métal / métal génèrent des usures par frottement (du type *fretting*)*,* ce qui peut mener à la rupture des liaisons.

La présente invention propose un perfectionnement qui apporte une solution simple, efficace et économique à ce problème.

### Exposé de l'invention

L'invention concerne un réducteur de vitesse à train planétaire ou épicycloïdal de turbomachine, selon la revendication 1.

L'invention propose ainsi d'amener de l'huile jusqu'aux rotules et en particulier aux interfaces rotule / doigt, de façon à lubrifier leurs surfaces en contact et ainsi limiter l'apparition de *fretting.* L'huile est ici amenée par des moyens de lubrification intégrés dans les doigts de guidage des rotules.

Le réducteur selon l'invention peut comprendre une ou plusieurs des caractéristiques suivantes, prises isolément les unes des autres, ou en combinaison les unes avec les autres :
- chaque doigt comprend un alésage central de circulation d'huile relié à au moins un canal s'étendant entre ledit alésage central et une surface cylindrique externe du doigt destinée à être entourée par ladite rotule ; les moyens de lubrification sont ainsi formés simplement par des alésages et canaux prévus dans les doigts de guidage des rotules ;
- ledit alésage central débouche à une extrémité axiale radialement interne dudit doigt, et a en section à cette extrémité une forme tronconique évasée radialement vers l'intérieur ; de l'huile peut être projetée directement dans cette extrémité évasée, et s'écouler, du fait des forces centrifuges, dans l'alésage et le canal jusqu'à la rotule ;
- ledit alésage central s'étend le long d'un prolongement axial cylindrique dudit doigt, qui s'étend radialement vers l'intérieur ; ce prolongement peut être conçu pour diminuer la distance radiale entre l'alésage d'une part, et la source d'huile d'autre part ; cette source d'huile est par exemple formée par des moyens de projection, tels qu'un gicleur ;
- ledit prolongement axial a un diamètre externe inférieur au diamètre de ladite surface cylindrique, et/ou s'étend radialement vers l'intérieur depuis un rebord annulaire externe du doigt ;
- ledit au moins un canal a une orientation sensiblement radiale par rapport à l'axe longitudinal dudit doigt, ou est incliné par rapport à cet axe, par exemple radialement vers l'extérieur par rapport à l'axe X du solaire ; l'inclinaison du ou de chaque canal est déterminée en fonction des zones à lubrifier du doigt ainsi que des forces centrifuges appliquées à l'huile en fonctionnement.

La présente invention concerne un réducteur de vitesse à train planétaire ou épicycloïdal de turbomachine, comportant une cage et un fût comportant une rangée annulaire de bras axiaux engagés dans les logements de la périphérie de la cage, chaque bras comportant un évidement de montage d'une rotule traversée par le doigt dudit logement.

Le réducteur selon l'invention peut comprendre une ou plusieurs des caractéristiques suivantes, prises isolément les unes des autres, ou en combinaison les unes avec les autres :
- le réducteur comprend des moyens de lubrification des satellites qui comportent une rangée annulaire de gicleurs d'huile s'étendant parallèlement à l'axe X et répartis autour de cet axe X, les gicleurs étant configurés pour projeter de l'huile vers lesdits doigts ; l'invention propose ainsi d'utiliser les gicleurs de lubrification des satellites, pour lubrifier les interfaces entre les doigts et les rotules ;
- le nombre de gicleurs est égal au nombre de doigts et chaque gicleur s'étend dans un plan passant par l'axe X, qui passe également par un doigt ; ceci permet de simplifier l'alimentation en huile des alésages des doigts par les gicleurs ;
- chaque gicleur comprend un alésage interne de circulation d'huile relié à au moins un canal de passage d'huile s'étendant depuis ledit alésage jusqu'à au moins un orifice de projection d'huile situé à la périphérie dudit gicleur et orienté vers un desdits doigts ; de l'huile est ainsi projetée par le gicleur dans l'alésage du doigt, cette huile s'écoulera ensuite jusqu'à la rotule du fait des forces centrifuges ;
- ledit au moins un orifice est situé au sommet d'un bossage radial dudit gicleur ; le bossage permet de rallonger la longueur dudit au moins un canal et d'améliorer le guidage de l'huile avant sa projection.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue schématique en coupe axiale d'un réducteur à train épicycloïdal,
- la figure 3 est une vue schématique en perspective d'un réducteur à train épicycloïdal,
- la figure 4 est une vue schématique en perspective d'un rouet et de gicleurs du réducteur de la figure 3,
- la figure 5 est une vue schématique en perspective d'un porte-satellites du réducteur de la figure 3,
- la figure 6 est une vue schématique en perspective d'un porte-satellites d'un réducteur selon l'invention,
- la figure 7 est une vue schématique partielle, en coupe axiale, et à plus grande échelle, d'une partie du porte-satellites de la figure 6,
- la figure 8 est une vue à plus grande échelle d'une partie de la figure 7, sans le perfectionnement proposé par l'invention,
- la figure 9 est une vue à plus grande échelle d'une partie de la figure 7, avec le perfectionnement proposé par l'invention,
- la figure 10 est une vue similaire à celle de la figure 9 et illustrant une variante de réalisation de l'invention,
- la figure 11 est une vue à plus grande échelle d'une partie de la figure 10,
- la figure 12 est une vue très schématique en coupe transversale d'un doigt de guidage de rotule, et
- la figure 13 est une vue similaire à celle de la figure 11 et illustrant une autre variante de réalisation de l'invention.

### Description détaillée d'un mode de réalisation de l'invention

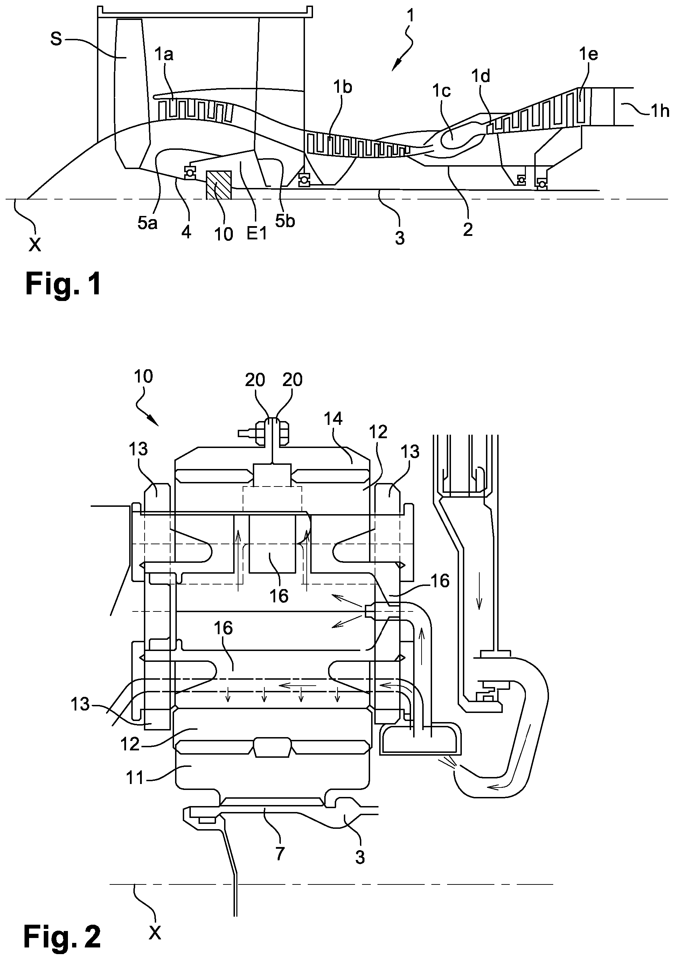

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2 987 416.

Le réducteur 10 embraye d'une part sur l'arbre BP 3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et six. Les satellites 12 tournent aussi autour de l'axe X de la turbomachine sauf dans le cas d'un planétaire où ils tournent uniquement autour de leurs axes de révolution, en engrenant sur des dentures internes de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

La figure 2 montre l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon lié à la structure fixe de la turbomachine, jusqu'aux pignons et aux paliers à lubrifier. Le dispositif de lubrification comporte classiquement trois parties : une première partie liée à la structure fixe et délivrant l'huile vers les parties tournantes du réducteur 10, un rouet tournant avec le porte-satellites 13 réceptionnant cette huile dans le cas d'un épicycloïdal et d'un distributeur assemblé au porte-satellite, qui sont fixes sur une architecture planétaire, et des circuits de distribution d'huile alimentés en huile par le rouet pour l'acheminer vers les endroits à lubrifier.

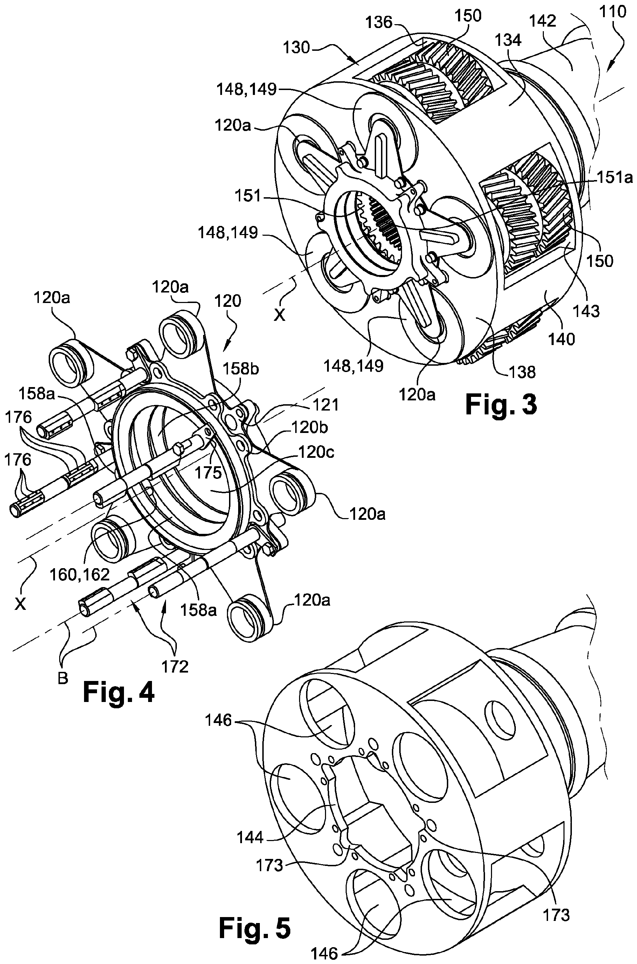

Les figures 3 à 5 illustrent un exemple plus concret d'un réducteur 110 ici à train épicycloïdal.

La référence 130 désigne le porte-satellites du réducteur 110, qui est ici du type monobloc comprenant une partie formant une cage 134 et une partie formant un fût 142. La cage comporte deux parois annulaires 136, 138 coaxiales et reliées à leur périphérie par une paroi cylindrique 140.

La paroi annulaire 136 est solidaire du fût 142 sensiblement cylindrique, partiellement visible, comportant des moyens d'engrènement avec un disque de soufflante de la turbomachine. Les moyens d'accouplement sont par exemple des cannelures longitudinales.

Dans l'exemple représenté, la paroi cylindrique 140 est ajourée et comprend des lumières 143 traversantes en direction radiale permettant le montage des satellites.

La paroi 138 comprend une ouverture centrale 144 (permettant le montage du solaire) centrée sur l'axe X et une série d'orifices 146 régulièrement répartis autour de l'axe X, l'ouverture 144 et les orifices 146 étant traversants en direction axiale (figure 5).

Les orifices 146 servent au montage des axes 148 de rotation des satellites 150. Les axes 148 sont parallèles à l'axe X et sont montés dans la cage 134 par translation axiale en passant par les orifices 146. Ils sont fixés à leurs extrémités longitudinales sur les parois 136, 138, respectivement.

Les satellites 150 sont montés à rotation sur les axes 148 et ont leurs périphéries externes qui traversent en partie les lumières 143 en vue de leur engrènement avec la couronne externe du réducteur destinée à entourer la cage 134.

Les satellites 150 engrènent avec le solaire 151 qui comprend des cannelures rectilignes internes 151a d'accouplement à un autre arbre tel qu'un arbre de turbine.

Un rouet 120 est rapporté et fixé sur la paroi 138, du côté de sa face externe, c'est-à-dire celle qui n'est pas située du côté des satellites 150. Le rouet 120 a pour fonction de lubrifier le réducteur 110 et comprend des moyens de lubrification configurés pour amener du lubrifiant jusqu'à des gicleurs 172 et jusqu'aux axes 148 et paliers 149. L'alimentation en huile des gicleurs permet de lubrifier les dents d'engrènement des satellites 150 et du solaire 151.

Le rouet 120 a une forme générale annulaire et comprend des bras 120a en saillie radiale vers l'extérieur, au nombre de cinq dans l'exemple représenté. Le rouet 120 est destiné à être monté coaxialement sur la paroi 138 et comporte une face 120b d'appui et de fixation sur cette paroi.

Le rouet 120 comporte une ouverture centrale 120c délimitée extérieurement par une partie annulaire définissant deux gorges annulaires 158a, 158b coaxiales et disposées axialement l'une à côté de l'autre. Ces gorges 158a, 158b s'étendent autour de l'axe X et débouchent radialement vers l'intérieur. Leur paroi de fond radialement externe comprend des orifices en communication fluidique avec des canaux radiaux 160, d'une part, et des conduits radiaux 162, d'autre part.

Bien que cela ne soit pas représenté, de l'huile est destinée à être projetée dans les gorges 158a, 158b par des moyens d'alimentation en lubrifiant. Ces moyens comprennent en général une série d'injecteurs qui sont disposés autour de l'axe X et traversent les ouvertures 120c, 144. Les injecteurs sont portés par un stator et pulvérisent du lubrifiant radialement vers l'extérieur directement dans les gorges 158a, 158b, qui va ensuite s'écouler dans les canaux 160 et conduits 162.

Chacun des conduits 162 communique à son extrémité radialement externe avec une cavité d'un axe 148 en vue de l'alimentation en lubrifiant de cet axe 148 et du palier 149 associé. Le lubrifiant amené par les conduits 162 est destiné à être injecté dans les cavités, puis à s'écouler à travers les conduits précités jusqu'à la périphérie des paliers 149.

Chacun des canaux 160 communique à son extrémité radialement externe avec une extrémité longitudinale d'un gicleur 172 visible notamment à la figure 4. Les gicleurs 172 ont une forme allongée et s'étendent parallèlement à l'axe X. Leurs axes d'allongement sont notés B. Ils sont au nombre de cinq et régulièrement répartis autour de l'axe X en étant chacun disposés entre deux axes 148 adjacents.

Chaque gicleur 172 comprend des orifices 176 de projection d'huile sur les dentures des satellites 150.

Les gicleurs 172 sont fixés au rouet 120 au moyen de pattes 175 vissées, et le rouet 120 est rapporté et fixé par des vis sur la paroi annulaire 138 du porte-satellites 130.

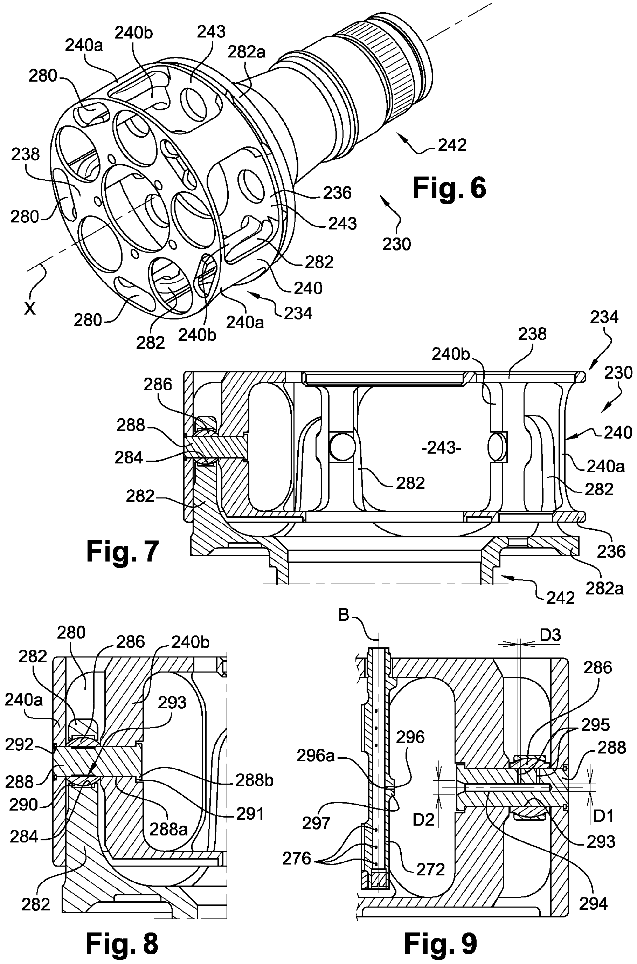

Dans les figures 6 et suivantes, les éléments déjà décrits dans ce qui précède sont désignés par les mêmes références augmentées d'une centaine.

Les figures 6 à 8 représentent une autre technologie de porte-satellites 230, dans laquelle la cage 234 et le fût 242 sont reliés par des liaisons à rotules.

La paroi cylindrique 240 de la cage 234 est ici du type à double peau et comprend une peau externe 240a interrompue par les lumières 243 et une peau interne 240b interrompue par les mêmes lumières 243.

Chacune des peaux 240a, 240b est formée par une rangée annulaire de bandes longitudinales de matière qui s'étend sensiblement parallèlement à l'axe X. Les bandes de matière des peaux sont alignées radialement et définissent entre elles des logements 280 inter-peaux qui débouchent axialement sur les parois 236, 238 de la cage. Les logements 280 débouchent également circonférentiellement, entre les peaux 240a, 240b.

La paroi cylindrique 240 de la cage comprend ainsi une rangée annulaire de logements 280. Ces logements 280 reçoivent des bras axiaux 282 solidaires d'une paroi annulaire 282a sensiblement radiale du fût 242. La paroi 282a est située à une extrémité axiale du fût 242, opposée à ses cannelures d'accouplement. Les bras 282 s'étendent axialement depuis la paroi 282a et sont engagés par translation axiale dans les logements 280.

Chaque bras 282 présente ici une forme aplatie dont l'épaisseur est déterminée en fonction de la distance inter-peaux, c'est-à-dire de l'épaisseur radiale des logements 280. Chaque bras 282 comprend en outre un bord périphérique sensiblement en U, ce bord périphérique ayant en section transversale une forme générale incurvée convexe. Ceci permet de limiter les arêtes vives des bras 282 et donc le risque de détérioration par contact avec la cage 234.

Chaque bras 282 comprend, sensiblement en son milieu, un évidement 284 de montage d'un rotule 286 destinée à être traversé par un doigt 288 porté par la cage 234.

L'évidement 284 a une orientation sensiblement radiale par rapport à l'axe X. Il a une forme générale cylindrique et reçoit une bague 290 de guidage de la rotule 286. La cage 234 et la rotule 286 ont une épaisseur, mesurée dans une direction radiale par rapport à l'axe X, qui est inférieure à la distance inter-peaux ou l'épaisseur radiale du logement 280, de façon à pouvoir être engagées dans ce logement concomitamment avec le bras 282 de support de ces pièces.

Chaque logement 280 est traversé par un doigt 288 qui a une orientation sensiblement radiale par rapport à l'axe X. Chaque doigt 288 comporte un corps cylindrique 288a reliée à une extrémité axiale, ici radialement interne, à un rebord annulaire externe 288b. Le doigt 288 est ici engagé par translation radiale depuis l'intérieur à travers des orifices radiaux des peaux 240a, 240b, son rebord 288b étant destiné à venir en appui radial sur une portée cylindrique 291 de la peau interne 240b. Le corps cylindrique 288a comprend, à son extrémité axiale opposée au rebord 288b, une rainure annulaire de montage d'un anneau de verrouillage 292. Cet anneau de verrouillage 292 est destiné à prendre appui radialement sur une portée cylindrique de la peau externe 240a. Après insertion du doigt 288 dans les orifices des peaux, jusqu'à mise en appui du rebord 288b sur la portée 291, l'anneau 292 est monté dans la rainure du corps 288a pour verrouiller radialement le doigt 288 vis-à-vis des peaux 240a, 240b.

Comme on le voit à la figure 8, la rotule 286 entoure une surface cylindrique 293 du doigt 288 qui peut faire l'objet de *fretting* en fonctionnement. Pour limiter ou supprimer ce phénomène, l'invention propose d'intégrer au doigt 288 des moyens de lubrification de la rotule 286.

La figure 9 représente un premier mode de réalisation de l'invention dans lequel le doigt 288 comprend un alésage central 294 de circulation d'huile relié à au moins un canal 295 s'étendant entre l'alésage central et la surface cylindrique 293 du doigt destinée à être entourée par la rotule 286.

L'alésage 294 s'étend le long de l'axe du doigt 288, sur une majeure partie de la longueur de celui-ci. Il a un diamètre interne noté D1. L'alésage comprend une extrémité axiale, située radialement à l'extérieur par rapport à l'axe X, qui est fermée, et une extrémité axiale opposée, située radialement à l'intérieur, qui a en section une forme tronconique évasée radialement vers l'axe X. Cette forme tronconique présente une petite base de diamètre D1 et une grande base de diamètre D2 supérieure à D1.

Le nombre de canaux 295 et leur diamètre, noté D3, sont prédéterminés. Ils sont ici au nombre de deux et s'étendent radialement par rapport à l'axe du doigt 288, dans un même plan passant par cet axe. Ils débouchent à une extrémité dans l'alésage 294 et à l'extrémité opposée sur la surface 293.

Comme cela est visible à la figure 9, le plan passant par l'axe X et par l'axe du doigt 288 passe également par l'axe B d'un gicleur 272. En plus des orifices 276 de projection d'huile vers les dentures des satellites, le gicleur 272 comprend au moins un orifice 296 de projection d'huile vers le doigt 288 et en particulier vers l'extrémité évasée de son alésage 294.

L'orifice 296 est ici formé par le débouché radialement externe d'un canal 296a de passage d'huile formé dans la paroi tubulaire du gicleur 272. Ce canal 296 s'étend dans un bossage radial 297 de cette paroi tubulaire et a une longueur suffisante pour orienter et guider l'huile vers l'alésage 294. Comme on le voit à la figure 9, les orifices 276 du gicleur sont orientés plutôt radialement vers l'intérieur alors que son ou ses orifices 296sont orientés plutôt radialement vers l'extérieur. Les orifices 276, 296 sont alimentés par un alésage interne de circulation d'huile du gicleur 272.

On comprend donc que chaque doigt 288 est associé à un gicleur 272 et lubrifié par ce gicleur 272. Autrement dit, le nombre de doigts 288 est égal au nombre de gicleurs 272, qui est égal à cinq dans l'exemple représenté. De plus, comme évoqué dans ce qui précède, les axes du doigt 288 et du gicleur 272 associé sont situés dans un même plan passant par l'axe X.

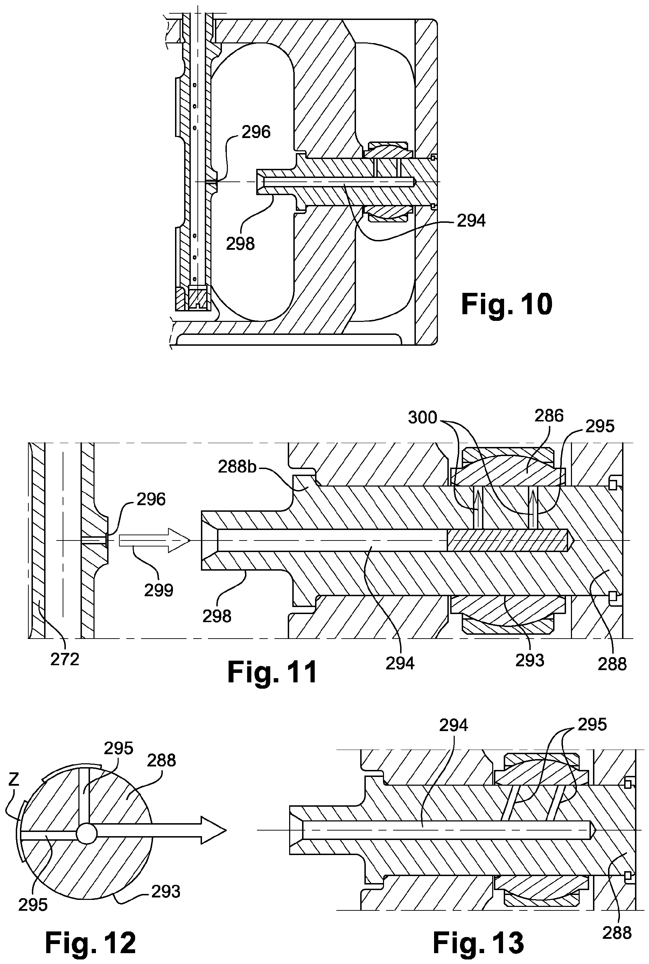

La figure 10 représente une variante de réalisation de l'invention dans laquelle le doigt 288 comprend un prolongement cylindrique 298 radialement interne. L'alésage 294 s'étend dans ce prolongement 298, ce qui permet de rallonger ce dernier et surtout de réduire la distance radiale entre l'orifice de projection 296 et l'extrémité évasée de l'alésage 294.

La figure 10 montre que le prolongement 298 a un diamètre externe inférieur au diamètre de ladite surface cylindrique 293 et s'étend radialement vers l'intérieur depuis le rebord 288b du doigt 288.

En fonctionnement, de l'huile est projetée par l'orifice 296 en direction de l'alésage 294 (flèche 299). Le gicleur 272 et le doigt 288 sont solidaires en rotation du porte-satellites et tournent donc à la même vitesse. L'huile projetée par le gicleur est centrifugée et est reçue dans l'alésage. Elle va ensuite s'écouler radialement de l'intérieur vers l'extérieur jusqu'aux canaux 295 (flèches 300), pour être ensuite acheminée jusqu'à la surface 293, toujours sous l'effet des forces centrifuges.

Les canaux 295 peuvent être orientés de façon à ce que leurs débouchés sur la surface 293 soient situés en amont et/ou en aval de la zone Z préférentielle d'application de la charge du type *fretting,* et/ou au niveau de cette zone Z (cf. figure 12).

Les canaux 295 peuvent également être orientés dans des directions facilitant l'écoulement de l'huile vers la surface 293, telles que par exemple radialement vers l'extérieur par rapport à l'axe X, comme représenté à la figure 13.

La solution proposée par l'invention consiste ainsi à amener de l'huile aux interfaces doigt / rotule pour lubrifier les surfaces 293 et ainsi limiter l'apparition du *fretting.* Très peu d'huile peut être nécessaire pour supprimer le *fretting* sur cette interface, mais dans le cas présent il faut amener de l'huile sur une partie tournante, et dans une pièce non prévue pour être alimentée en huile. Pour amener l'huile dans cette zone, on utilise les gicleurs 272 dans l'exemple représenté, qui sont relativement proches. Ces gicleurs amènent de l'huile sous pression aux engrènements du réducteur pour refroidir et lubrifier les dentures en fonctionnement. Dans l'exemple proposée, la solution consiste donc à réaliser au moins un orifice 296 supplémentaire dans le gicleur pour avoir un jet d'huile qui part en direction du doigt 288 de guidage de la rotule 286. Etant donné que l'on se trouve dans un champ centrifuge (pièces tournantes), le jet d'huile va avoir une trajectoire qui va dans un premier temps suivre le champ centrifuge. L'huile est ensuite guidée jusqu'à l'interface à lubrifier par l'intermédiaire de l'alésage 294 et des canaux 295. Le doigt étant soumis au champ centrifuge, toute goutte d'huile qui entre dans l'alésage 294 va être forcée de s'écouler jusqu'à l'interface par le champ centrifuge et donc assurer la lubrification de l'interface. La forme évasée en entrée de l'alésage permet de capter un maximum d'huile et donc de maximiser l'alimentation en huile du doigt 288. En fonction de l'architecture, il est possible que le gicleur 272 soit trop loin pour alimenter correctement le doigt 288. En effet, le changement de repère et le vent relatif peut éclater le jet d'huile à une certaine distance du gicleur. Si cette distance est inférieure à la distance séparant le doigt du gicleur, l'huile n'arrivera pas jusqu'au doigt. La variante de la figure 11 permet de prolonger le doigt 288 pour recueillir l'huile avant l'éclatement du jet.

## Revendications

1. Réducteur (110) de vitesse à train planétaire ou épicycloïdal de turbomachine, le réducteur (110) comportant une cage (234) de porte-satellites (230) et un fût (242) comportant une rangée annulaire de bras axiaux (282), la cage (234) contenant un solaire central (151) d'axe X de rotation et une rangée annulaire de satellites (150) disposés autour de l'axe X et engrenés avec ledit solaire, la cage (234) comportant à sa périphérie des logements axiaux (280) recevant les bras axiaux (282) solidaires du fût (242), chaque logement (280) étant traversé par un doigt (288) sensiblement radial guidant en rotation une rotule (286) portée par un desdits bras (282), chaque bras (282) comportant un évidement (284) de montage d'une rotule (286) traversée par le doigt (288) dudit logement, **caractérisé en ce que** chaque doigt (288) comprend des moyens (294, 295) de lubrification de ladite rotule.

2. Réducteur (110) selon la revendication 1, dans lequel chaque doigt (288) comprend un alésage central (294) de circulation d'huile relié à au moins un canal (295) s'étendant entre ledit alésage central et une surface cylindrique externe (293) du doigt destinée à être entourée par ladite rotule (286).

3. Réducteur (110) selon la revendication 2, dans lequel ledit alésage central (294) débouche à une extrémité axiale radialement interne dudit doigt (288), et a en section à cette extrémité une forme tronconique évasée radialement vers l'intérieur.

4. Réducteur (110) selon la revendication 2 ou 3, dans lequel ledit alésage central (294) s'étend le long d'un prolongement axial cylindrique (298) dudit doigt (288), qui s'étend radialement vers l'intérieur.

5. Réducteur (110) selon la revendication 4, dans lequel ledit prolongement axial (298) a un diamètre externe inférieur au diamètre de ladite surface cylindrique (293), et/ou s'étend radialement vers l'intérieur depuis un rebord annulaire externe (288b) du doigt (288).

6. Réducteur (110) selon l'une des revendications 2 à 5, dans lequel ledit au moins un canal (295) a une orientation sensiblement radiale par rapport à l'axe longitudinal dudit doigt (288), ou est incliné par rapport à cet axe, par exemple radialement vers l'extérieur par rapport à l'axe X du solaire.

7. Réducteur (110) selon l'une des revendications précédentes, dans lequel il comprend des moyens de lubrification des satellites (150) qui comportent une rangée annulaire de gicleurs d'huile (272) s'étendant parallèlement à l'axe X et répartis autour de cet axe X, les gicleurs étant configurés pour projeter de l'huile vers lesdits doigts (288).

8. Réducteur (110) selon la revendication 7, dans lequel le nombre de gicleurs (272) est égal au nombre de doigts (288) et chaque gicleur s'étend dans un plan passant par l'axe X, qui passe également par un doigt.

9. Réducteur (110) selon la revendication 7 ou 8, dans lequel chaque gicleur (272) comprend un alésage interne de circulation d'huile relié à au moins un canal (296a) de passage d'huile s'étendant depuis ledit alésage jusqu'à un orifice (296) de projection d'huile situé à la périphérie dudit gicleur et orienté vers un desdits doigts (288).

## Patentansprüche

1. Planeten- oder Epizykloiduntersetzungsgetriebe (110) einer Turbomaschine, wobei das Untersetzungsgetriebe (110) einen Käfig (234) einer Planetenträger (230) und einen Schaft (242) beinhaltet, der eine Ringanordnung an axialen Armen (282) beinhaltet, wobei der Käfig (234) eine zentrale Sonnenwelle (151) einer Drehachse X und eine Ringanordnung von Satelliten (150) enthält, die um die Achse X herum angeordnet sind und in die Sonnenwelle eingreifen, wobei der Käfig (234) an seiner Peripherie axiale Aufnahmen (280) beinhaltet, die die axialen Arme (282), die fest mit dem Schaft (242) verbunden sind, aufnehmen, wobei jede Aufnahme (280) durch einen im Wesentlichen radialen Finger (288) durchquert wird, der ein Kugelgelenk (286), das von den Armen (282) getragen wird, in der Drehung führt, wobei jeder Arm (282) eine Ausnehmung (284) zum Anbringen eines Kugelgelenks (286) beinhaltet, das von dem Finger (288) der Aufnahme durchquert wird, **dadurch gekennzeichnet, dass** jeder Finger (288) Mittel (294, 295) zum Schmieren des Kugelgelenks umfasst.

2. Untersetzungsgetriebe (110) nach Anspruch 1, wobei jeder Finger (288) eine zentrale Bohrung (294) zum Zirkulieren von Öl umfasst, die mit mindestens einem Kanal (295) verbunden ist, der sich zwischen der zentralen Bohrung und einer zylindrischen Außenoberfläche (293) des Fingers erstreckt, die dazu bestimmt ist, von dem Kugelgelenk (286) umgeben zu werden.

3. Untersetzungsgetriebe (110) nach Anspruch 2, wobei die zentrale Bohrung (294) in ein radial inneres axiales Ende des Fingers (288) mündet, und zu diesem Ende im Schnitt eine radial nach außen ausgestellte, kegelstumpfartige Form aufweist.

4. Untersetzungsgetriebe (110) nach Anspruch 2 oder 3, wobei sich die zentrale Bohrung (294) entlang einer zylindrischen axialen Verlängerung (298) des Fingers (288) erstreckt, die sich radial nach innen erstreckt.

5. Untersetzungsgetriebe (110) nach Anspruch 4, wobei die axiale Verlängerung (298) einen Außendurchmesser kleiner als der Durchmesser der zylindrischen Oberfläche (293) aufweist, und/oder sich radial von einem ringförmigen äußeren Rand (288b) des Fingers (288) nach innen erstreckt.

6. Untersetzungsgetriebe (110) nach einem der Ansprüche 2 bis 5, wobei der mindestens eine Kanal (295) eine im Wesentlichen radiale Ausrichtung in Bezug auf die Längsachse des Fingers (288) aufweist, oder in Bezug auf diese Achse, beispielsweise in Bezug auf die Achse X der Sonnenwelle radial nach außen geneigt ist.

7. Untersetzungsgetriebe (110) nach einem der vorstehenden Ansprüche, wobei es Mittel zum Schmieren der Satelliten (150) umfasst, die eine Ringanordnung an Öldüsen (272) beinhalten, die sich parallel zur Achse X erstrecken und um diese Achse X herum verteilt sind, wobei die Düsen konfiguriert sind, um Öl zu den Fingern (288) zu projizieren.

8. Untersetzungsgetriebe (110) nach Anspruch 7, wobei die Anzahl an Düsen (272) gleich der Anzahl an Fingern (288) ist und sich jede Düse in einer Ebene erstreckt, die durch die Achse X verläuft, die auch durch einen Finger verläuft.

9. Untersetzungsgetriebe (110) nach Anspruch 7 oder 8, wobei jede Düse (272) eine innere Bohrung zur Ölzirkulation umfasst, die mit mindestens einem Kanal (296a) für einen Ölverlauf verbunden ist, der sich von der Bohrung bis zu einer Öffnung (296) zum Projizieren von Öl erstreckt, die sich an der Peripherie der Düse befindet und zu einem der Finger (288) ausgerichtet ist.

## Claims

1. Turbine engine speed reducer (110) with a planetary or epicyclic gear train, the reducer (110) comprising a planet-carrier (230) cage (234) and a barrel (242) comprising an annular row of axial arms (282), the cage (234) containing a central sun gear (151) with an axis X of rotation and an annular row of planet gears (150) arranged around the axis X and geared with said sun gear, the cage (234) comprising, at the periphery thereof, axial housings (280) receiving the axial arms (282) secured to the barrel (242), each housing (280) being passed through by a substantially radial finger (288) guiding in rotation a ball joint (286) carried by one of said arms (282), each arm (282) comprising a hole (284) for mounting a ball joint (286) passed through by the finger (288) of said housing, **characterised in that** each finger (288) comprises means (294, 295) for lubricating said ball joint.

2. Reducer (110) according to claim 1, wherein each finger (288) comprises a central bore (294) for circulating oil connected to at least one channel (295) extending between said central bore and an outer cylindrical surface (293) of the finger intended to be surrounded by said ball joint (286).

3. Reducer (110) according to claim 2, wherein said central bore (294) opens at a radially internal axial end of said finger (288), and has, in the cross-section at this end, a truncated shape flared radially inwards.

4. Reducer (110) according to claim 2 or 3, wherein said central bore (294) extends along a cylindrical axial extension (298) of said finger (288), which extends radially inwards.

5. Reducer (110) according to claim 4, wherein said axial extension (298) has an outer diameter less than the diameter of said cylindrical surface (293), and/or extends radially inwards from an outer annular ledge (288b) of the finger (288).

6. Reducer (110) according to one of claims 2 to 5, wherein said at least one channel (295) has a substantially radial orientation with respect to the longitudinal axis of said finger (288), or is inclined with respect to this axis, for example radially outwards with respect to the axis X of the sun gear.

7. Reducer (110) according to one of the preceding claims, wherein it comprises means for lubricating planet gears (150) which comprise an annular row of oil nozzles (272) extending parallel to the axis X and distributed around this axis X, the nozzles being configured to project oil to said fingers (288).

8. Reducer (110) according to claim 7, wherein the number of nozzles (272) is equal to the number of fingers (288) and each nozzle extends in a plane passing through the axis X, which also passes through a finger.

9. Reducer (110) according to claim 7 or 8, wherein each nozzle (272) comprises an inner bore for circulating oil connected to at least one channel (296a) for the passage of oil extending from said bore to an orifice (296) for projecting oil located at the periphery of said nozzle and oriented towards one of said fingers (288).
